# EUROPÄISCHE PATENTANMELDUNG

(11) **EP 1 075 102 A2**
(43) Veröffentlichungstag der Anmeldung: **07.02.2001**
(21) Anmeldenummer: 00440219.4
(22) Anmeldetag: 31.07.2000
(51) Int. Cl.: H04J 3/06, G06F 1/14

(54) **Verfahren zum Synchronisieren von Zeitinformation**

(30) Priorität: 06.08.1999 DE 19937088
(71) Anmelder: ALCATEL, 75008 Paris (FR)
(72) Erfinder: Turban, Karl-Albert, 71229 Leonberg-Höfingen (DE)
(74) Vertreter: Menzietti, Domenico, Dipl.-Ing

(57) **Zusammenfassung**

Die Erfindung stellt ein Verfahren zum Synchronisieren von Zeitinformation in einem SDH-Netzwerk zur Verfügung, das eine Genauigkeit von kleiner gleich eine Millisekunde aufweist. Dadurch wird erreicht, daß auftretende Alarme zeitgenauer zwischengespeichert werden können. Das Verfahren ist insbesondere dadurch gekennzeichnet, daß die Zeitinformation in einen zu übertragenden SDH-Datenstrom eingefügt wird und anschließend zusammen mit dem SDH-Datenstrom zu mindestens einem Netzwerkelement (10, 20, 30, 40, 50) übertragen wird. Jeder Datenstrom enthält aneinandergereihte Rahmen. Jeder Rahmen hat eine Länge von 125µs. Wenn für die Übertragung einer Zeitinformation beinhaltend Sekunde, Minute, Stunde, Tag, Monat, Jahr beispielsweise acht Rahmen benötigt werden, so kann eine Genauigkeit von einer Millisekunde erzielt werden.

## Beschreibung

Die Erfindung bezieht sich auf ein Verfahren zum Synchronisieren von Zeitinformation beinhaltend Uhrzeit und Datum in SDH-Netzwerkelementen.

SDH-Netzwerke, SDH=Synchrone Digitale Hierarchie, sind aufgebaut aus SDH-Netzwerkelementen, die über elektrische oder optische Leitungen miteinander verbunden sind. Jedes Netzwerkelement beinhaltet ein Transportelement und ein Kontrollelement. Das Transportelement dient der Übertragung von Daten. Die Daten werden in einem Datenstrom übertragen, der aus aneinandergereihten, vorgegebenen Rahmen gebildet wird. Jeder Rahmen hat einen sog. Overhead und eine sog. Payload. Die Payload dient der Übertragung von Nutzinformation, also der Daten. Der Overhead beinhaltet u.a. Synchronisationsinformation, z.B. das Rahmenkennwort, sowie Steuerinformation. Das Kontrollelement hat eine externe Schnittstelle, z.B. Q3, zu einem separaten lokalen Netzwerk. Das lokale Netzwerk ist beispielsweise ein Computernetzwerk oder ein Netzwerkmanagement Netzwerk. Über das lokale Netzwerk wird eine Zeitinfomation beinhaltend Uhrzeit und Datum zu den Netzelementen verteilt. Aufgrund von Laufzeitunterschieden haben die einzelnen Netzwerkelemente unterschiedliche lokale Uhrzeiten. Die lokalen Uhrzeiten differieren um ca. eine Sekunde. Zur zeitgenauen Erfassung von Alarmen ist diese Genauigkeit nicht ausreichend. Alarmmeldungen können beispielsweise sein: LOF (Loss Of Frame), LOS (Loss Of Signal), AIS (Alarm Indication Signal). Es ist wünschenswert, Alarme zusammen mit der genauen Zeit ihres Auftretens für eine spätere Auswertung zwischenzuspeichern.

Die Erfindung stellt ein Verfahren zum Synchronisieren von Zeitinformation zur Verfügung, das eine Genauigkeit von kleiner gleich eine Millisekunde aufweist. Dadurch wird erreicht, daß auftretende Alarme zeitgenauer zwischengespeichert werden können. Das Verfahren ist insbesondere dadurch gekennzeichnet, daß die Zeitinformation in einen zu übertragenden SDH-Datenstrom eingefügt wird und anschließend zusammen mit dem SDH-Datenstrom zu mindestens einem Netzwerkelement übertragen wird. Jeder Datenstrom enthält aneinandergereihte Rahmen. Jeder Rahmen hat eine Länge von 125µs. Wenn für die Übertragung einer Zeitinformation beispielsweise acht Rahmen benötigt werden, so kann eine Genauigkeit von einer Millisekunde erzielt werden.

Nachfolgend wird die Erfindung anhand eines Ausführungsbeispiels unter Zuhilfenahme von Figuren erläutert. Es zeigen:
- Fig.1: eine schematische Darstellung eines SDH-Netzwerkes,
- Fig.2: ein erfindungsgemäßes Zustandsdiagramm und
- Fig.3: einen erfindungsgemäßen Wechselpuffer.

Ein SDH-Netzwerk beinhaltet mindestens zwei Netzwerkelemente, die über eine elektrische oder optische Leitung miteinander verbunden sind. Daten werden bidirektional zwischen den Netwerkelementen ausgetauscht.

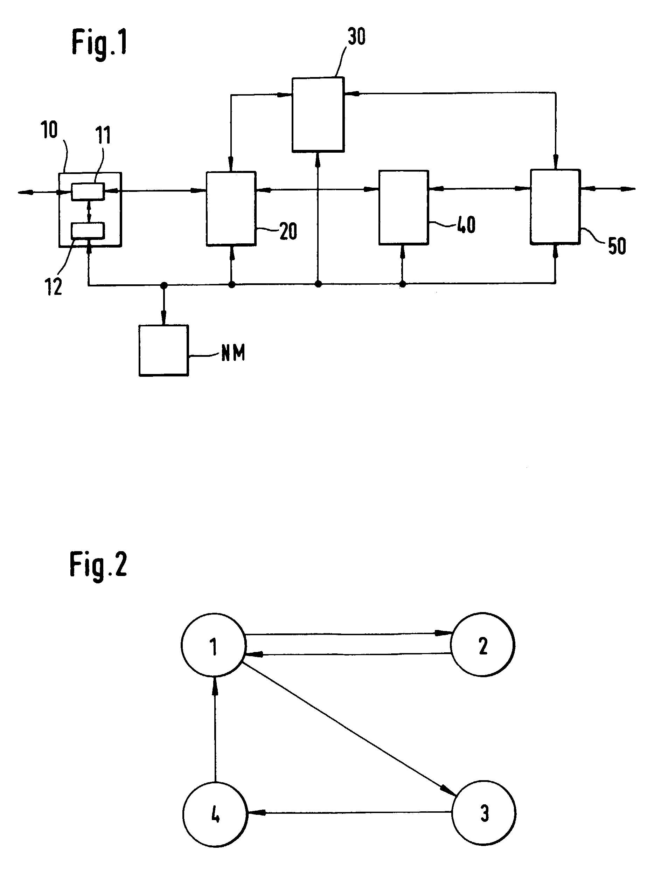

In Fig. 1 ist ein SDH-Netzwerk mit fünf Netzwerkelementen dargestellt. Die Netzwerkelemente 10, 20, 30, 40, 50 sind über elektrische, bidirektionale Leitungen miteinander verbunden. Über diese Leitungen werden Sprache, Bilder und/oder Daten übertragen. Zusätzlich ist ein Netzwerkmanagement NM vorgesehen, um die Netzwerkelemente 10, 20, 30, 40, 50 zu überwachen und zu steuern. Das Netzwerkmanagement NM ist über ein lokales Netzwerk mit den Netzwerkelementen 10, 20, 30, 40, 50 verbunden. Das lokale Netzwerk ist beispielsweise als Computernetzwerk mit Busstruktur ausgeführt. Es gibt aber auch Implementierungen in denen die Q-Schnittstelleninformation über den SDH eigenen DCC (digital communication channel, Bestandteil des RSOH), Ethernet oder gar über Modem übertragen werden.

Alle Netzwerkelemente 10, 20, 30, 40, 50 beinhalten jeweils ein Transportelement und ein Kontrollelement. Netzwerkelement 10 beinhaltet Transportelement 11 und Kontrollelement 12. Transportelement 11 dient der Übertragung und dem Empfang von Daten. Die Daten werden in einem Datenstrom übertragen, der aus aneinandergereihten, vorgegebenen Rahmen gebildet wird. Jeder Rahmen hat eine Länge von 125µs, und besteht aus einem sog. Overhead und einer sog. Payload. Die Payload dient der Übertragung von Nutzinformation, also der Virtuellen Container, die Daten, Bilder und/oder Sprache transportieren. Der Overhead beinhaltet u.a. Synchronisationsinformation, z.B. das Rahmenkennwort, sowie Steuerinformation. Kontrollelement 12 hat eine externe Schnittstelle, z.B. Q3, zum separaten lokalen Netzwerk.

Damit an allen Netzwerkelementen 10, 20, 30, 40, 50 nahezu die identische Uhrzeit zur Verfügung steht, wird eine Zeitinformation beinhaltend Uhrzeit und Datum über Transportelement 11 ausgesendet. Die Netzwerkelemente 20, 30, 40, 50 empfangen diese Zeitinformation und synchronisieren sich auf. Die Laufzeitverzögerung pro Rahmen beträgt 125µs. Als Schnittstellendatenformat wird STM-4 oder höhere Multiplexstrukturen verwendet. Innerhalb des STM-4 RSOH gibt es ein SY-Byte, das bisher noch nicht verwendet wird; RSOH=Regenarator Section Overhead. Für das SY-Byte wird folgende Aufteilung verwendet:

Bit 0: Flag, das zum Beginn einer Sekunde auf 1 gesetzt wird und für den Rest der Sekunde auf 0.

Bit 1-7: Daten, mit folgender Datenstruktur:

| | | | | | | | |
|---|---|---|---|---|---|---|---|
| Flag | Bit 0 (LSB) | Bit 1 | Bit 2 | Bit 3 | Bit 4 | Bit 5 | Bit 6 (MSB) |

Fig. 2 zeigt ein erfindungsgemäßes Zustandsdiagramm. Es gibt vier Zustände für das Übermitteln der Uhrzeit und des Datums:
Zustand 1: IDLE: Es werden weder Flags noch Daten gesendet.
Zustand 2: Es wird ein Flag aber keine Daten gesendet.
Zustand 3: Es wird der Datenanfang signalisiert.
Zustand 4: Es werden Daten übertragen.

Für das SY-Byte wird folgende Kodierung verwendet:

| Bedeutung | Bit 0 | Bit 1 | Bit 2 | Bit 3 | Bit 4 | Bit 5 | Bit 6 | Bit 7 |
|---|---|---|---|---|---|---|---|---|
| IDLE | 0 | 1 | 0 | 1 | 0 | 1 | 0 | 1 |
| Flag | 1 | 0 | 0 | 0 | 0 | 0 | 0 | 0 |
| Datenanfang | 1 | 1 | 1 | 0 | 1 | 0 | 1 | 0 |
| Daten | 0 | X | X | X | X | X | X | X |

Die Kodierung des IDLE Signals und des Datenanfangs sind so gewählt, daß beide außerhalb des Wertebereichs von Sekunde, Minute, Stunde, Tag, Monat, Jahr liegen. Somit ist zu allen Zeiten eine Synchronisation auf den Datenanfang möglich.

Es sind folgende Zustandsübergänge möglich:

| Ausgangszustand | Endzustand | Bedingung für den Zustandsübergang |
|---|---|---|
| 1 | 2 | Beginn der Sekunde (erster Rahmen in der Sekunde) |
| 1 | 3 | Beginn der Übertragung der Uhrzeit |
| 2 | 1 | Flag wurde gesendet |
| 3 | 4 | Uhrzeit wird übertragen |
| 4 | 1 | Uhrzeit übertragen |

Datum und Uhrzeit werden in folgender fester Datenstruktur übertragen:

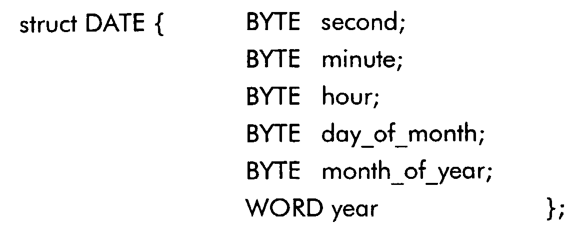

BYTE bedeutet ein 7 Bit binäres Zeichen ohne Vorzeichen, WORD ein 14 Bit binäres Zeichen ohne Vorzeichen, das in zwei aufeinanderfolgenden Rahmen übertragen wird.

Damit ergeben sich folgende Wertebereiche und Definitionsbereiche für die Zeitinformation:

| | Definitionsbereich | Wertebereich |
|---|---|---|
| Sekunde | 0 ... 128 | 0 ... 59 |
| Minute | 0 ... 128 | 0 ... 59 |
| Stunde | 0 ... 128 | 0 ... 23 |
| Tag | 0 ... 128 | 1 ... 31 |
| Monat | 0... 128 | 1 ... 12 |
| Jahr | 0 ... 16384 | 0 ... 16384 |

Mit obigen Werte- und Definitonsbereichen ist eine korrekte Zeitinformation bis zum 31. Dezember 16384 übertragbar.

Alternativ kann das Jahr anstelle in einem WORD auch in einem BYTE übertragen werden. Dann kann eine korrekte Zeitinformation für 128 Jahre übertragen werden. Anstelle von acht aufeinanderfolgenden Rahmen werden dann nur sieben benötigt.

Die Uhrzeit der nächsten Sekunde (nicht der aktuellen Sekunde) wird in acht aufeinanderfolgenden SDH Rahmen übertragen. Wird ein Flag empfangen, so wird die zuletzt empfangene Uhrzeit als aktuelle Uhrzeit im Board des Empfängers, also im Transportelement eines Netzwerkelements verwendet. Zur Speicherung ist ein Wechselpuffer vorgesehen.

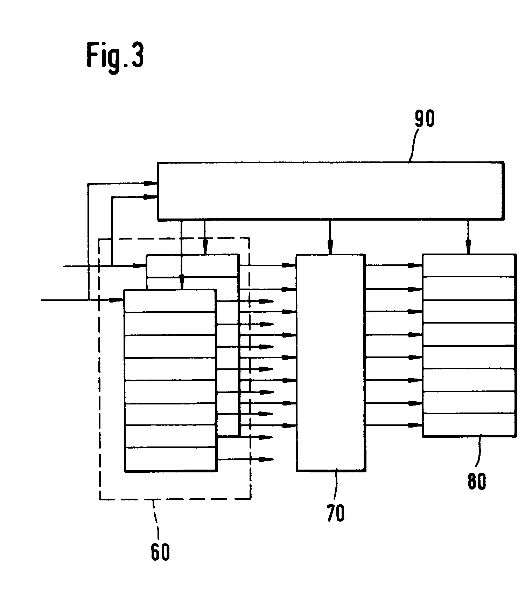

Fig. 3 zeigt einen Wechselpuffer. Der Wechselpuffer beinhaltet einen ersten Speicher 60, eine Auswahleinrichtung 70, einen zweiten Speicher 80 und eine Steuereinrichtung 90.

Speicher 60 beinhaltet mindestens zwei parallel geschaltete Speicher. Jeder dieser Speicher dient dem Empfang von Zeitinformation. Netzwerkelement 50 aus Fig. 1 beinhaltet beispielsweise je eine Schnittstelle zu Netzwerkelement 30 und Netzwerkelement 40. Für jede Schnittstelle ist ein Speicher zur Speicherung der aktuell empfangenen Uhrzeit + Datum vorgesehen.

Die Steuereinrichtung 90 steuert die Auswahleinrichtung 70, die den Inhalt eines Speichers des Speichers 60 in den Speicher 80 kopiert. Im Speicher 60 ist stets die aktuell empfangene Uhrzeit + Datum gespeichert, im Speicher 80 die aktuell verwendete Uhrzeit + Datum. Maßgeblich für das Kopieren der Uhrzeit + Datum von Speicher 60 nach Speicher 80 ist das Empfangen eines Flags. Die Steuereinrichtung 90 ist geeignet den Empfang des Flag zu detektieren. Je nachdem aus welcher Richtung, d.h. von welchem Netzwerkelement das Flag zuerst empfangen wird, wird derjenige Speicher aus Speicher 60 ausgewählt, dessen Inhalt nach Speicher 80 kopiert wird. Der Inhalt der eingehenden SY-Bytes wird für jede Schnittstelle fortwährend von der Steuereinrichtung 90 analysiert. Wird ein Datenanfang erkannt, so werden die nachfolgenden acht SY-Bytes in den entsprechenden Speicher geschrieben.

Die Zeitinformation wird ausgehend von Netzwerkelement 10 aus Fig. 1 über Netzwerkelement 20 zu Netzwerkelement 30 weitergeleitet. Ferner wird die Zeitinformation über Netzwerkelement 20 zu den Netzwerkelementen 40 und 50 weitergeleitet. Eine Weiterleitung der Zeitinformation von Netzwerkelement 30 zu Netzwerkelement 50 ist grundsätzlich nicht notwendig. Es ist vorgesehen, in Netzwerkelement 30 die Weiterleitung der empfangenen Zeitinformation aktivierbar und deaktivierbar auszugestalten. Im Normalfall, d.h. ohne Störung im Netzwerk ist die Weiterleitung deaktiviert. Bei Auftreten einer Störung, z.B. Ausfall von Netzwerkelement 40 wird die Weiterleitung aktiviert. Auf diese Art und Weise wird Netzelement 50 auch bei Ausfall von Netzwerkelement 40 mit der aktuellen Zeitinformation versorgt. Durch Aktivieren und Deaktivieren der Weiterleitung der Zeitinformation ist es in komplexen Netzwerken möglich ein Netzwerk für die Übertragung der Uhrzeit aufzubauen, eine Hierarchie für die Übertragung der Uhrzeit zu bestimmen sowie die Übertragungszeit für die Uhrzeit zu minimieren.

Die Verwendung des SY-Byte ist vorteilhaft, da die Übertragunsgwege bereits vorhanden sind, die Übertragung im RSOH synchron erfolgt und die Bytes im RSOH innerhalb eines Netzwerkelements stets verfügbar sind.

Anstelle die Uhrzeit je Sekunde zu übertragen kann ein weiteres BYTE zur Übertragung von Millisekunden eingefügt werden. Dann erfolgt die Übertragung beispielsweise alle 10 Millisekunden unter Verwendung von neun aufeinander folgenden Rahmen oder acht Rahmen, wenn für das Jahr ebenfalls ein BYTE verwendet wird.

## Patentansprüche

1. Verfahren zum Synchronisieren von Zeitinformation beinhaltend Uhrzeit und Datum in SDH-Netzwerkelementen,
**dadurch gekennzeichnet,**
daß in einem Transportelement (11) eines ersten Netzwerkelements (10) die Zeitinformation in einen zu übertragenden SDH-Datenstrom eingefügt wird und anschließend zusammen mit dem SDH-Datenstrom zu mindestens einem zweiten Netzwerkelement (20, 30, 40, 50) übertragen wird, und daß die Zeitinformation im zweiten und jedem weiteren Netzwerkelement (20, 30, 40, 50) aus dem empfangenen SDH-Datenstrom extrahiert wird.

2. SDH-Netzwerkelement (10) beinhaltend ein Transportelement (11) und ein Kontrollelement (12),
**dadurch gekennzeichnet,**
daß das Transportelement (11) geeignet ist, eine Zeitinformation beinhaltend Uhrzeit und Datum in den zu übertragenden SDH-Datenstrom einzufügen und eine Zeitinformation beinhaltend Uhrzeit und Datum aus einem empfangenen SDH-Datenstrom zu extrahieren.

3. Verfahren nach Anspruch 1, dadurch gekennzeichnet, daß die Uhrzeit Stunde, Minute, Sekunde und das Datum Jahr, Monat, Tag enthält.

4. Verfahren nach Anspruch 1, dadurch gekennzeichnet, daß die Zeitinformation in das SY Byte eingefügt wird.

5. SDH-Netzwerkelement (10) nach Anspruch 2, dadurch gekennzeichnet, daß ein Wechselpuffer vorgesehen ist, um die aktuell empfangene Uhrzeit und die aktuell verwendete Uhrzeit zwischenzuspeichern.
